# EUROPEAN PATENT APPLICATION

(11) **EP 2 608 163 A1**
(43) Date of publication of application: **26.06.2013**
(21) Application number: 11306720.1
(22) Date of filing: 21.12.2011
(51) Int. Cl.: G07F 7/06, B62B 3/14, B62B 3/16, G06K 19/077, G06K 19/07

(54) **Customer carried shopping utensil**

(71) Applicant: Gemalto SA, 92190 Meudon (FR)
(72) Inventor: Buton, Christophe, 92190 MEUDON (FR); Capomaggio, Gregory, 92190 MEUDON (FR); Caruana, Jean-Paul, 92190 MEUDON (FR)

(57) **Abstract**

The present invention relates to a shopping utensil, provided to a customer by a point-of-sale for the duration of a purchase session and destined to be carried by the customer inside the point of sale during the purchase session. Said shopping utensil comprises connection means 11a and 11b to a customer-bound active contactless payment token 13 and a power supply 17 to power the active contactless payment token 13 when connected.

## Description

The invention relates to a customer carried shopping utensil such as a shopping cart, basket or hand-held terminal, more specifically the type of shopping utensil that is point-of-sale specific, and to contactless payment.

In the domain of point-of-sale management, the appearing of remote electronic transactions made the act of buying and payment more and more user-friendly, more specifically in the large self-service shopping centres such as supermarkets and hypermarkets.

In particular, it is known to use remote connection means, such as a radio frequency (RF) interface, between a user-carried shopping utensil and a point-of-sale specific payment terminal, located around the cash registers. The user carried shopping utensil is usually a hand-held scanner. The user picks said scanner from a deposit station, uses said hand-held terminal during the shopping inside the point-of-sale and, after payment of the purchased goods puts the hand-held terminal back at the deposit station.

In most existent systems, the contactless communication means are used to communicate the list of the purchased items to a cash register terminal, where the customer proceeds to final payment using a secured token, for example a credit card with PIN number.

In particular in contactless shopping, there is a difference to be made between the point-of-sale related hand-held terminal for listing the purchased goods, and the customer related payment token for final payment of the listed goods, the two using very different communication ways for different purposes. In particular, the customer related payment token is brought to the point-of-sale by the customer himself, and contains sensitive bank account related data of the customer, whereas the hand-held terminal is owned by the point-of-sale and only lent to the user for the duration of the purchase.

Contactless smartcards comprise the usual smartcard functionalities such as data storage and encryption, but feature in addition embedded antennas in a chip to emit in a near field communication (NFC) channel the data usually transferred upon insertion of the smartcard in the corresponding reading terminal.

Nonetheless, the aforementioned contactless smartcards require a power supply to be able to emit the electromagnetic signal they use. For example the Visa PayWave™ system, using the contactless smartcard chips in a credit card, uses induction from the reader as power supply, much like in RFID. It is to be pointed out that the NFC in the Visa PayWave™ system are used only for the final paying ("token" functionality), and require that the chip on the card be very close (few centimetres often less than ten) to the reader.

To work without induction from a reader, the contactless smartcards have to be connected to a separated power supply, for example the battery of a phone in the frame of mobile payment, and are hence designated as "active". The card itself is then stripped down to a mere microSD or equivalent format card inserted in a slot, and the encryption circuitry and embedded antennas allow to add the mobile payment functionalities to the phone.

In case a sufficient power supply is at hand, the NFC capacities of the contactless smartcards are enhanced to a point where the connection can be made efficient up to a distance of few hundreds of millimetres up to a few meters, a functionality the nowadays used payment tokens do not use, but which would allow transparent paying without the need to present the card or token to a reader on purpose.

Albeit, the sufficient power supply is generally a battery, which is heavy and cumbersome, thus limiting the miniaturization of the active contactless tokens.

In order to overcome the aforementioned drawbacks, the invention proposes a shopping utensil, provided to a customer by a point-of-sale for the duration of a purchase session and destined to be carried by the customer inside the point of sale during the purchase session, characterized in that it comprises connection means to a customer-bound active contactless payment token and a power supply to power the active contactless payment token when connected.

The heavy and cumbersome battery is thus part of the shopping utensil, so that the payment token can be reduced to a light and small device while still allowing almost transparent payment.

The shopping utensil may present one or more of the following characteristics, taken separately or in combination.

The active contactless payment token is a contactless smartcard, and in that the connection means comprise a slot for inserting the contactless smartcard.

It is a shopping cart, a shopping basket or a hand-held scanner.

The connection means and the power supply are embedded in a handle of the shopping utensil.

The power supply comprises a rechargeable battery and it comprises connectors to connect to a deposit station where it is deposited after use by the customer, and means to recharge the power supply through a power supply line through the connection means while deposited.

The connectors are realised as mating connection means configured to extend the power supply line from the precedent to the next shopping utensil in a line or stack when stacked deposited in a line.

The connectors are configured to lock the shopping utensil at the deposit station and to free the shopping utensil from the deposit station when the payment token is inserted in the connection means.

It comprises a dynamo configured to convert movement of a mobile part of the shopping utensil in electrical energy stored in the power supply.

It comprises a display screen and in that the screen is configured to display ads and discounts targeted on a consumer profile using consumer related data stored on the payment token.

It is configured to trigger the token to emit a positioning signal used to determine a position of the shopping utensil inside the point-of-sale.

It is configured to power-up the payment functionalities of the payment token upon reception of a short range signal from an antenna located near a cash-register.

It comprises a payment token lock connected to the connection means configured to lock the payment token in an inserted position unless the customer performs an authentication.

It comprises an alarm connected to the connection means configured to send an alert signal if the shopping utensil is deposited at a deposit station while the payment token is inserted in the connection means.

Another object of the invention is the associated method to perform a contactless payment at a point-of-sale using an active contactless payment token bound to a customer, with the steps :
- the customer connects the contactless payment token to a shopping utensil provided by the point-of-sale for the duration of a purchase session and destined to be carried by the customer inside the point of sale during the purchase session,
- connection means of the shopping utensil establish a connection to the customer-bound active contactless payment token and a power supply of the shopping utensil powers the active contactless payment token when connected,
- the contactless payment token uses power from the power supply to perform the contactless payment.

In addition the method may further comprise the steps :
- the customer takes the shopping utensil from a deposit station with a power supplier charging the power supply of the shopping utensil when deposited,
- the customer deposits the shopping utensil at the deposit station for the power supply to be charged after the purchase session.

Other advantages and characteristics of the invention will appear at the reading of the description of the following figures, given merely as examples of preferred embodiments in a non-limiting fashion, among which:
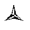 Figure 1 is a schematic view of a shopping basket according to
   the invention,
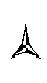 Figure 2 is a schematic view of a plurality of shopping baskets
   according to figure 1 at a deposit station,
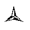 Figure 3 is a schematic view of a shopping cart according to the invention,
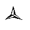 Figure 4 is a schematic view of a plurality of shopping carts according to figure 3 at a deposit station,
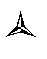 Figure 5 is a schematic view of a handle lock and embedded items for a shopping utensil,
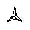 Figure 6 is a schematic view of a hand-held scanner according to the invention.

In all figures the same references relate to the same elements.

As used herein the term shopping utensil designates any utensil a customer uses inside a point-of-sale for picking and/or transport of the goods he desires to purchase. The term may designate in particular a shopping cart, a shopping basket or a hand-held scanner.

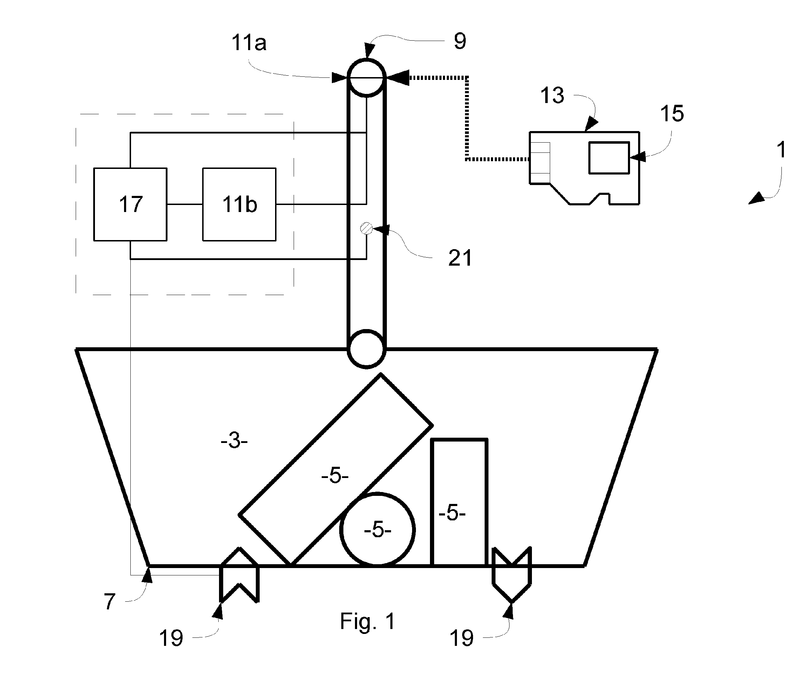

Figure 1 is a schematic view of the different elements of a shopping utensil 1 in form of a shopping basket according to a particular embodiment of the invention.

The shopping basket 1 comprises a storage tray 3, open on its upper side, where the customer puts the selected goods 5 for purchase, for example after taking them from shelves in an aisle of the point-of-sale, typically a supermarket or hypermarket.

The depicted shopping basket 1 has a hard storage tray 3 with a cubic capacity shape, open on top, the bottom 7 of the tray 3 being slightly smaller than the upper opening to allow multiple shopping baskets 1 to be piled up in a compact fashion.

The shopping basket 1 comprises an arch or handle 9, acting as a grip to grasp the basket 1. The handle is here articulated to the tray 3, so that it can be lowered on the side, to allow compact piling up of multiple baskets 1.

In the handle 9 are implemented connection means 11a, 11b for establishing a connection with a customer-bound active contactless payment token 13. The contactless payment token may have a contactless smartcard of microSD form factor with an embedded emitter chip 15. The connection means comprise a slot 11a, whose dimensions are adjusted on the dimensions of the contactless payment token 13, and a reader 11b. The reader 11b is a usual contact reader, interrogating the payment token 13 through conductive contacts in the slot 11a, and configured to allow the utensil 1, here the shopping basket, to use the emitter chip 15 of token 13 for payment.

Also implemented in the handle 9 is a power supply 17, comprising for example a battery, in particular a rechargeable battery, or a high capacity capacitor. The power supply 17 is used to power the emitter chip 15 of the contactless payment token 13. Also, if customer related data is stored on the token 13, the power supply 17 can power the reader 11b to retrieve and possibly use said data during the payment process. The consumer related data may for example comprise a fidelity program account or discount options.

The reader 11b and the power supply 17 are shown on figure 1 outside the handle 9 for clarity reasons. They may be integrated in the handle 9 or any other part of the shopping utensil 1. The handle 9 is advantageous in that it undergoes less stress during use than, for example, the tray 3, and is a separate unit that can be changed independently from the others.

As variants, the token 13 may be a credit card, a SD, miniSD or microSD card with mobile payment utilities, or a point-of-sale specific fidelity program card with payment functionalities. The token 13 may also be embedded in a key ring. In any case, the token 13 comprises active remote communication means 15 and has to support remote payment functionalities through said remote communication means 15.

As used in the proposed invention, the shopping utensil 1 is used as a power supplier for the remote communication means of the token 13.

The basket 1 depicted in figure 1 comprises in addition connectors 19 to reload the power supply 17 when the basket 1 is at a deposit point featuring mating connectors.

The connectors 19 comprise mating connectors (male/female) on the respective sides of the bottom 7 of the basket 1. The connectors 19 thus transmit the electric power through the bottom to the upper next basket 1 in the pile when stacked, as the mating connectors 19 on the lower side of the bottom 7 of said upper next basket 1 mate with the connectors 19 on the upper side of the bottom 7 of the lower next basket 1.

The basket 1 also features a load level indicator 21, here in form of a light emitting diode LED connected to the power supply 17. The LED 21 acts as a visual indication of whether the power supply 17 has to be recharged before use or not before further use of the basket 1. For example, the LED 21 may shine green when the power supply 17 is full, blink slowly or turn red when said power supply 17 is depleted or nearly depleted and blink quickly or turn yellow when the power supply 17 is being recharged.

To avoid continuous, power draining emission, the reader 11b with the token 13 may be configured to receive short range signals of antennae located near the cash-registers, and to activate the payment functionalities on reception. Upon reception of said signal by the reader 11b through the embedded antennae of the token 13, the reader triggers a power-up procedure of the short range communication so that it is only on when needed, while the token 13 may be put in sleep state most of the time.

With the aforementioned power saving implementation, non-rechargeable batteries may be used with a life expectancy of a few years for a standard use, in particular if using low energy communication protocols such as ZigBee.

In addition or as an alternative, the basket 1 may comprise on its handle 9 a button to trigger manually the activation of the payment functionalities, leaving them on only for a few minutes unless a transaction is started. This additional button serves as backup in case the automatic power-up procedure is compromised.

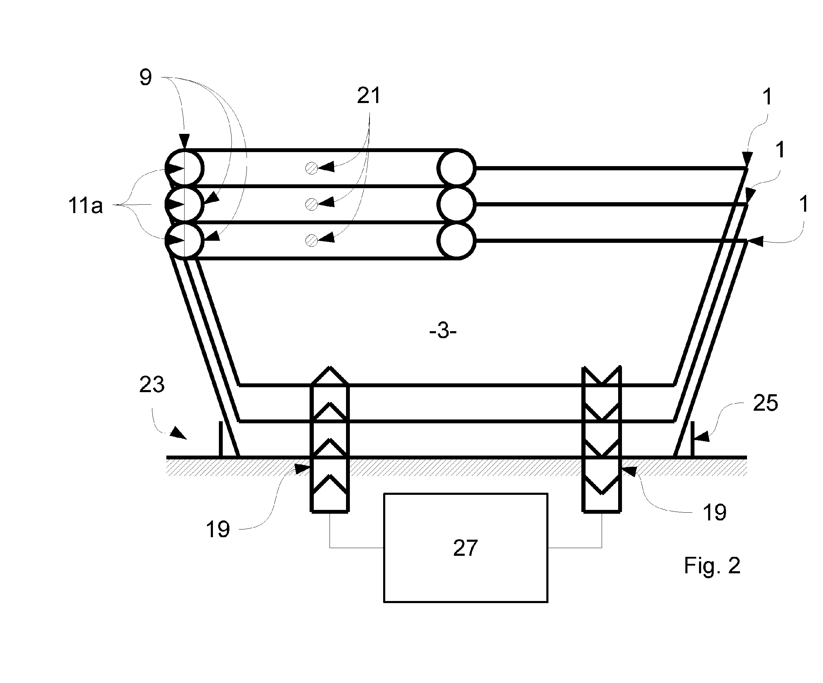

Figure 2 is a schematic view of a plurality of baskets 1 as depicted in figure 1, the baskets 1 being piled up at a deposit station 2 3.

The deposit station 2 3 can be delimited by markings on the ground and guidance elements, here a rim 2 5, and comprises a power supplier 2 7 to recharge the power supply 17. The guidance elements 25 ensure that the basket 1 falls in the right position when deposited, said right position being the position in which the connectors 19 are connected to the power supplier 2 7.

The power supplier 27 is for example a transformer connected to the power grid, a generator or a battery with superior power storage capacities. The power supplier 2 7 acts as a power source for all baskets 1 stacked in the deposit station 23. The power supplier 27 supplies directly power to the first basket 1 in the stack, and the baskets 1 then transmit through the connectors 19 the power to the next basket in the stack.

These features allow to stack the baskets 1 at the deposit station 23 as usually while ensuring that the power supply 17 of every basket 1 is recharged, so that the shopping habits of customers need not being modified any further. The connectors 19 form mating connection means configured to extend the power supply line from the precedent to the next basket 1 in a line or stack when they are properly deposited at the station 2 3. The connectors 19 mate with each other when piling up the baskets, so that the polarities are transmitted from one basket to the next in the pile, and the connection to the power supply 17 is parallel to this mating connectors 19 contact.

Also, the connectors 19 may be configured to lock the baskets in piled-up position, release of the locking mechanism being controlled by a lock in the handle 9. This lock releases a locking mechanism of connectors 19 for example upon insertion of token 13.

Since the token 13 contains sensitive data (e.g. bank account number), it is crucial that the user does not forget it in the shopping utensil 1. Therefore, the lock in handle 9 can be configured to give an alert if a token 13 is still inserted while the connectors 19 are connected to a power source (precedent basket 1 in pile or power supplier 2 7).

Point-of-sale employees may be appointed to manage the point-of-sale owned basket 1 pool in order to ensure that recharged baskets 1 are always at hand near the customer entrance, while malfunctioning ones are sent to maintenance and depleted ones are properly connected at a deposit station 23.

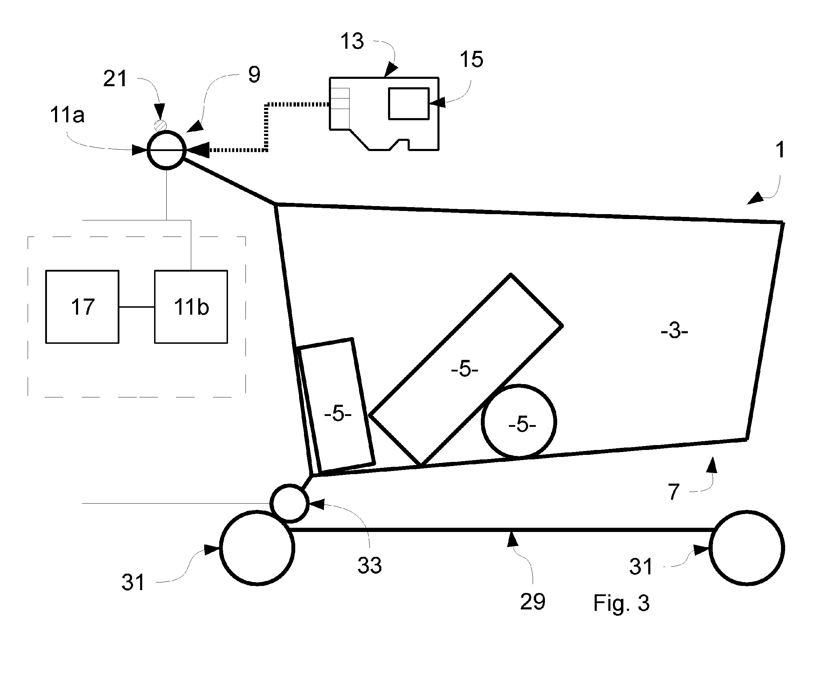

Figure 3 shows in a schematic representation an alternative embodiment of the shopping utensil 1.

In this embodiment, the shopping utensil 1 is a shopping cart, also known as trolley or shopping wagon. The shopping cart 1 comprises a tray 3 in which the user puts the goods 5 he wishes to purchase. The cart 1 comprises a chassis 29 with wheels 31, so that it can be pushed around in the point-of-sale.

The cart 1 also comprises a handle 9, on the upper rear extremity of the tray 3. Embedded in the handle are the reader 11b and the power supply 17, shown again on figure 3 outside the handle 9 for clarity reasons, the slot 11a for receiving the token 13 with embedded emitter chip 15, and a load level indicator 21.

In addition, the cart may comprise a dynamo 33, cooperating with a wheel 31, if construction permits, as a dynamo is hard to implement on swivel wheels, which many carts 1 feature. The dynamo 3 3 is connected to the power supply 17, and serves as means to recharge the power supply 17 during use, and does at least enhance the operation duration before reaching a moment when charging of the power supply 17 is needed.

In a more general perspective, the shopping utensil 1, whatever its actual form (cart, basket) may comprise a dynamo 33 configured to convert movement from a mobile part in electrical energy to be stored in the power supply 17.

As previously described, this is in the case of a shopping cart 1 a dynamo converting the rotation of a wheel 31 in electrical current. In the case of a basket such as in figures 1 and 2, a part of the handle 9 forming a grip section may be built mobile in rotation around the handle 9, and the dynamo may convert the balancing movement of the basket 1 in electrical current.

As last resort a collapsible crank may be added to the handle 9 as mobile part the user may put in motion to gather enough energy to complete the transaction.

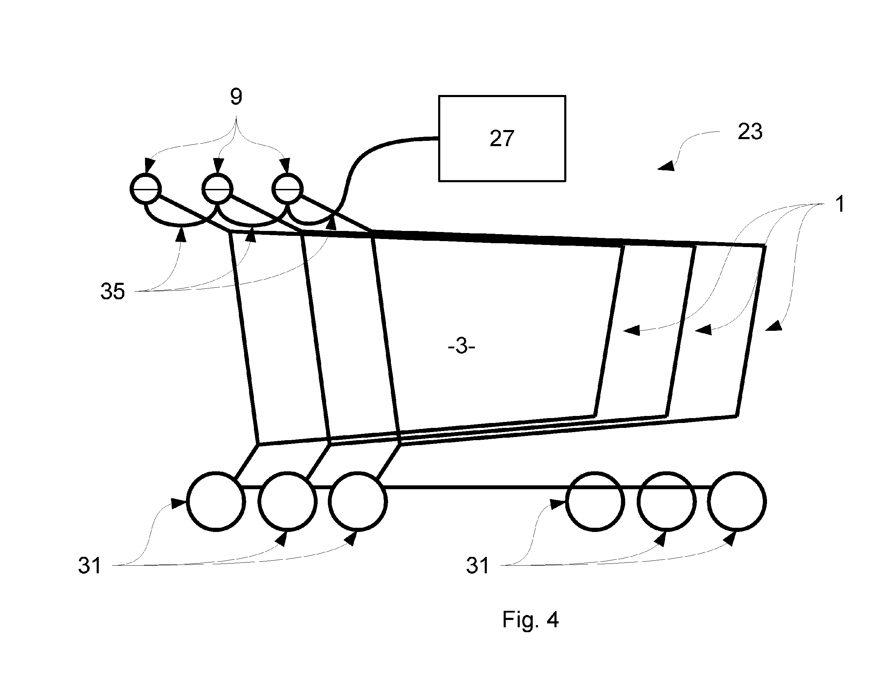

Figure 4 is a schematic view of a plurality of carts 1 deposited at a deposit station 23 such as a usual cart parking station. The deposit station 23 comprises in addition a power supplier 27.

The carts 1 are parked in a row, each one partially encased in the precedent one. The carts 1 are each tied to the precedent one at level of the handle 9 by locks embedded in said handle 9, which attach a lash 35 solidly linked to the handle of the precedent cart 1.

The lash 35 comprises a solid element such as a chain for anti-theft and structural attachment purposes, and a current conducting cable, both sheathed in a weather sustaining coating, for example plastic.

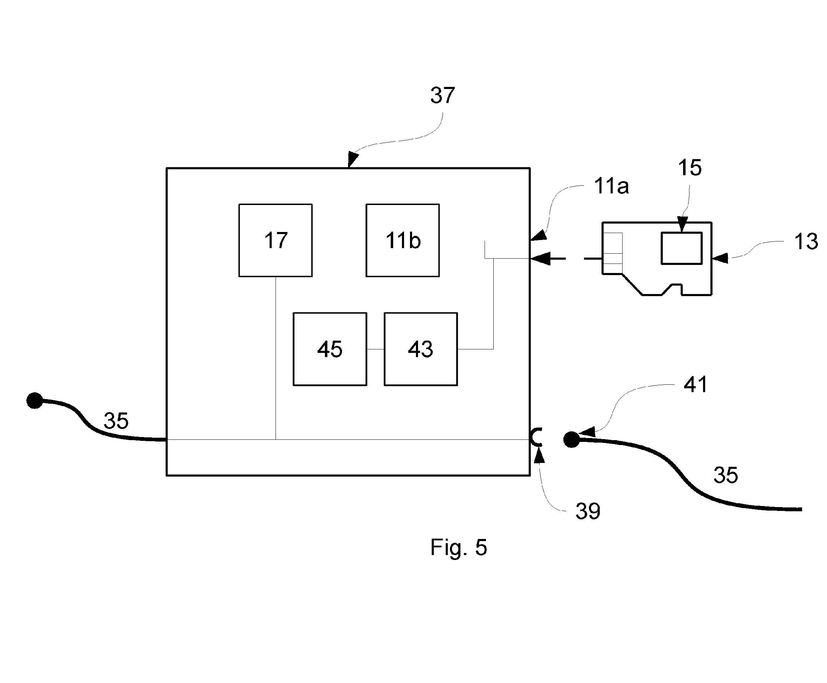

Figure 5 shows in more details a handle lock 37 as could be implemented in the previously described shopping carts 1.

The handle lock 37 is disposed on or integrated in the handle 9 of the shopping cart 1.

Embedded in the handle lock 37 are the slot 11a for inserting the token 13, the reader 11b and the power supply 17. The handle lock 37 features on one side a socket 39 in which is inserted a matching plug 41 at the end of the lash 3 5 from the precedent cart 1 in the line at a deposit station 23.

The socket 39 is connected in parallel to both the power supply 17 and the lash 3 5 of the considered cart 1. This allows recharging the power supply 17 by taking power from the precedent cart 1. The first cart 1 in a row is attached to the power supplier 2 7, using said power supplier 2 7 as primary power source for itself and all subsequent carts 1 in the line.

Here too the lash 35 and the lock 37 feature mating connection means (socket 39 and plug 41) configured to extend the power supply line from the precedent to the next shopping cart 1 in line when properly deposited.

The socket 39 and plug 41 may be configured to snap in and lock the cart 1 when the shopping cart 1 is deposited, this connection to a precedent cart 1 or power supplier 27 being a condition for being able to take out the token 13. The socket 39 then releases the plug 41 when inserting the token in the slit 11a, thus freeing the cart 1 from the deposit station 23.

As an alternative, the power supply 17, the connection means 11 and other components may be embedded in another part of the cart 1 rather than in the handle 9 as previously described.

Also represented on figure 5 is a token lock 43, connected to the slit 11a. The token lock 43 comprises mechanical blocking means which prevent the token 13 to be taken out of the slit 11a when in an engagement position. The blocking means enter the engagement position as soon as a token 13 is inserted in the slit 11a.

To bring the blocking means back in a releasing position where the token 13 can be taken out of the slit 11a, the user will have to perform an authentication. For example the authentication can be typing in a PIN code, applying a finger on a fingerprint scanner to compare the fingerprint with a reference stored on the token 13, or using a key.

The handle lock 17 also comprises an alarm 45 connected to the slot 11a or to the reader 11b that emits a signal such as a beeping sound when the lash 3 5 is connected while the token 13 is still inserted.

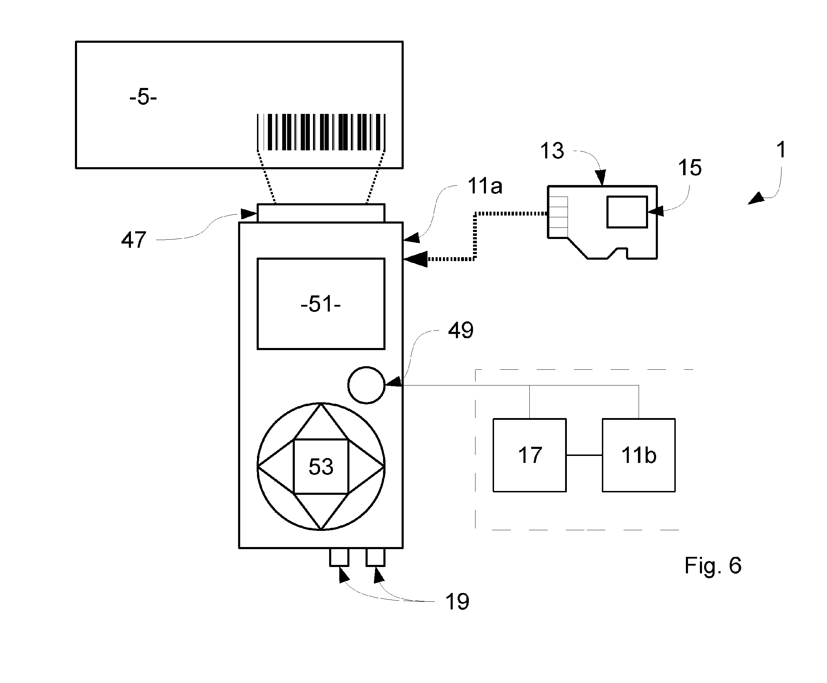

In figure 6, the shopping utensil 1 is represented in form of a hand-held scanner, the type used to pick goods 5 to purchase, using machine-readable markings such as bar codes.

In figure 6 the hand-held scanner 1 is a portable bar code reader. It comprises product selection means, here a bar-code reader 47, activated by pressing a capture button 49, along with a display 51 for displaying for example a designation and price of the last scanned article 5, and menu navigation means 53 to navigate in the system menu, for example to access the list of purchased goods 5, or to remove an article 5 from said list and the like.

In particular, the hand-held scanner 1 comprises connection means to a contactless payment token 13 with an embedded emitter chip 15, such as a slit 11a for receiving a microSD form factor card. The hand-held scanner 1 also comprises a token reader 11b and a power supply 17, once again shown outside the body of the hand-held scanner 1 for clarity.

The hand-held scanner 1 further comprises connectors 19 to be connected to a charging station, for example at the exit or entry of the point-of-sale, in between two purchase sessions.

The customer will pick up a hand-held scanner 1 from a charging session, initiate a purchase session by inserting his token 13 in the connection means 11a, and then start scanning products 5 he wishes to purchase. The token 13 is then used during payment at the final stages of the purchase session before the customer deposits the hand-held scanner 1 in a charging station and leaves the point-of-sale.

An alarm may be implemented and triggered if the token is left in the slot 11a while the scanner 1 is deposited back at a charging station. Also, a token 13 removal lock as previously described may be used.

In this embodiment the power supply 17 can be used for both contactless payment and product 5 selection means 37. Also, the antennae embedded in the emitter chip 15 may be used by the hand-held scanner 1 to read RFID tags on products 5 for selection purposes.

In some cases the shopping utensil 1 comprises a display screen large enough to display ads and offers. This for example the case for some shopping carts 1 having a console on handle 9 (see e.g. CA 2 506 739) or some hand held scanners 1.

With such a display the customer is informed of discounts and may be presented ads according to a profile established using data stored on the token 13, such as last purchases, regularly purchased products, fidelity program memberships and the like.

Furthermore, the shopping utensil 1 may be configured to trigger the emitter chip 15 of token 13 to emit a positioning signal. The positioning signal may be received by an antennae grid in the point-of-sale, and used to determine a position of the shopping utensil inside the point-of-sale using ZigBee, Bluetooth, Wi-Fi or other types of signals.

This positioning functionality would allow adapting ads on display to the department or aisle currently visited, or may be used to indicate on demand the best way to a specific product, thus adding a positioning and navigation system functionality to the shopping utensil 1.

In the case of the hand-held scanner or shopping cart 1, part of the memory of the token 13 can be used to store a tare value of the shopping cart 1 and/or customer brought shopping bags to allow correctly checking the consistency of the weight of finally selected products 5 in the cart or bag with the theoretical value computed based on the list of selected products 5, with minimal effort on side of the customer.

Said part of the memory may also store warranty related data, such as date and address of point-of-sale of purchase for goods 5 featuring a warranty contract on purchase. This data may be kept as backup to the paper receipts, and should for that purpose be accessible via a terminal for reclaim or printing.

Also the receipt related to the last purchase may be stored temporarily in electronic form on the token 13 and made available for read to security personnel through the emitter chip 15 powered by the power supply 17. This makes anti-theft security checks faster and potentially less traumatizing for the customer as he does not have to be asked for said receipt any more. Security checks might then be performed even without the customer noticing anything.

The token 13 may also be provided with its own power supply, in which case the power supply 17 of the shopping utensil is used to recharge said token 13 related power supply.

The method allows performing transparent or almost transparent payment, as the payment token 13 needs not to be presented to a reader. The only steps left in the payment procedure are bound to security, such as weight checks, checking of the total sum and possibly typing in a PIN number, undergoing a biometric identification or signing a receipt for bigger expenses.

## Claims

1. Shopping utensil, provided to a customer by a point-of-sale for the duration of a purchase session and destined to be carried by the customer inside the point of sale during the purchase session, **characterized in that** it comprises connection means (11a, 11b) to a customer-bound active contactless payment token (13) and a power supply (17) to power the active contactless payment token (13) when connected.

2. Shopping utensil according to claim 1, **characterized in that** the active contactless payment token (13) is a contactless smartcard, and **in that** the connection means comprise a slot (11a) for inserting the contactless smartcard.

3. Shopping utensil according to claim 1, **characterized in that** it is a shopping cart, a shopping basket or a hand-held scanner.

4. Shopping utensil according to claim 1, **characterized in that** the connection means (11a, 11b) and the power supply (17) are embedded in a handle (9) of the shopping utensil.

5. Shopping utensil according to claim 1, **characterized in that** the power supply (17) comprises a rechargeable battery and it comprises connectors (19) to connect to a deposit station where it is deposited after use by the customer, and means to recharge the power supply through a power supply line through the connection means (19) while deposited.

6. Shopping utensil according to claim 5, **characterized in that** the connectors (19) are realised as mating connection means (19) configured to extend the power supply line from the precedent to the next shopping utensil in a line or stack when stacked deposited in a line.

7. Shopping utensil according to claim 1, **characterized in that** the connectors (19) are configured to lock the shopping utensil at the deposit station (23) and to release the shopping utensil when the payment token (13) is inserted in the connection means (11a, 11b).

8. Shopping utensil according to claim 1, **characterized in that** it comprises a dynamo (33) configured to convert movement of a mobile part of the shopping utensil in electrical energy stored in the power supply (17).

9. Shopping utensil according to claim 1, **characterized in that** it comprises a display screen and **in that** the screen is configured to display ads and discounts targeted on a consumer profile using consumer related data stored on the payment token (13).

10. Shopping utensil according to claim 1, **characterized in that** it is
configured to trigger the payment token (13) to emit a positioning signal used to determine a position of the shopping utensil inside the point-of-sale.

11. Shopping utensil according to claim 1, **characterized in that** it is
configured to receive a short range activation signal and to power-up the payment functionalities of the payment token (13) upon reception of the short range activation signal.

12. Shopping utensil according to claim 1, **characterized in that** it
comprises a payment token lock (43) connected to the connection means (11a, 11b) configured to lock the payment token (13) in an inserted position unless the customer performs an authentication.

13. Shopping utensil according to claim 1, **characterized in that** it
comprises an alarm (45) connected to the connection means (11a, 11b) configured to send an alert signal if the shopping utensil is deposited at a deposit station (23) while the payment token (13) is inserted in the connection means (11a, 11b).

14. Method to perform a contactless payment at a point-of-sale using an
active contactless payment token bound to a customer, with the steps :
- the customer connects the contactless payment token to a shopping utensil provided by the point-of-sale for the duration of a purchase session and destined to be carried by the customer inside the point of sale during the purchase session,
- connection means (11a, 11b) of the shopping utensil establish a connection to the customer-bound active contactless payment token (13) and a power supply (17) of the shopping utensil powers the active contactless payment token (13) when connected,
- the contactless payment token (13) uses power from the power supply (17) to perform the contactless payment.
